# EUROPEAN PATENT SPECIFICATION

(11) **EP 3 074 203 B1**
(45) Date of publication and mention of the grant of the patent: **26.02.2020**
(21) Application number: 14802461.5
(22) Date of filing: 25.11.2014
(51) Int. Cl.: B29C 49/42, B29L 31/30, B29C 49/06, B65D 23/10, B65D 1/02, B65D 79/00, B29C 49/02, B29C 49/08, B29L 31/00

(54) **STRECHED-BLOW MOLDED CONTAINER HAVING AN INTEGRALY MOLDED DEEP GRIP AND PROCESS FOR MAKING SAID CONTAINER**
STRECKBLASGEFORMTER BEHÄLTER MIT EINEM INTEGRAL GEFORMTEN TIEFEN GRIFF UND VERFAHREN ZUR HERSTELLUNG DES BEHÄLTERS
RÉCIPIENT PAR ÉTIRAGE-SOUFFALGE COMPORANT UNE POINGÉE, ET SON PROCÉDÉ DE FABRICATION

(30) Priority: 26.11.2013 EP 13194483
(43) Date of publication of application: 05.10.2016
(73) Proprietor: Plastipak BAWT S.à.r.l., 4940 Bascharage (LU)
(72) Inventor: VAN DIJCK, Sam, B-2320 Hoogstraten (BE); DESSAINT, Alain, B-1910 Kampenhout (BE); MATTHIEU, Natalia, B-2030 Antwerpen (BE)
(74) Representative: Matkowska, Franck
(86) International application number: PCT/EP2014/075521
(87) International publication number: WO 2015/078855

(56) References cited:
- EP-A1- 2 103 413
- WO-A1-00/59790
- WO-A1-2013/099573
- WO-A2-2006/113428
- US-A1- 2012 267 381
- US-A1- 2013 207 317

## Description

### Technical field

The present invention relates to the field of stretched-blow molded containers having an integrally molded deep grip, preferably with good ergonomics for large containers.

### Prior art

Processes for making stretched-blow molded containers, and in particular injection stretched-blow molded (ISBM) containers, having an integrally molded deep handgrip have already been disclosed in PCT applications WO 00/59790 and WO 2006/113428, and in European patent application EP 2 103 413.

According to said known processes, in a first blow molding step a first intermediate stretched-blow molded container is formed by stretch-blow molding a preform in a blow mold cavity to form an intermediate container comprising opposite "ears" or "bubbles" forming convex deformable regions. Then in a second boxing step carried out either in the same blow mold cavity or in a specific boxing mould, each deformable region of the intermediate container is mechanically pushed inwardly, preferably while maintaining a certain pressure inside the container, to invert the deformable region and form a molded hand grip in a final container.

The boxing step can be carried out when the temperature of the first intermediate stretched-blow molded container is below ("cold boxing") the glass transition temperature (Tg) of the polymer constituting the container, or when the temperature of the first intermediate stretched-blow molded container is above ("hot boxing") said glass transition temperature (Tg) as disclosed in EP 2 103 413.

The deformable convex regions of the intermediate container described In PCT application WO 00/59790 and shown on the drawings thereof are formed in two flat and opposite parallel vertical walls of the intermediate container, which limits the container size and volume for an ergonomic gripping.

In PCT application WO 2006/113428, the container side wall is designed in order to advantageously form a hand gripping region of smaller dimensions, and the deformable convex regions are formed in curved portions of the container side wall, which advantageously enables to make a container of large volume that is easier to grip. But the depth of the concave regions forming the molded hand grip after inward deformation of the deformable convex regions of the intermediate container is limited, and the solution disclosed in said PCT application WO 2006/113428 does not enable to make ISBM containers of large volume having a molded hand grip that is sufficiently deep for an ergonomic gripping of the container.

In European patent application EP 2 103 413, the outward "bubbles" forming the deformable convex regions can be inverted only by carrying out a hot boxing step, i.e. when the temperature of the first intermediate stretched-blow molded container is above the glass transition temperature (Tg) of the polymer constituting the container, and are not suitable for carrying out a cold boxing step.

### Objective of the invention

An objective of the invention is to propose a novel solution for making a stretched-blow molded containers having an integrally molded deep grip, said solution overcoming the drawbacks of the aforesaid solutions of the prior art.

### Summary of the invention

A first object of the invention is a process, as defined in claim 1,for making a stretched-blow molded container with at least one concave deep grip with an undercut region.

A second object of the invention is an intermediate stretched-blow molded container as defined in claim 15.

### Brief description of the drawings

Other technical characteristics and advantages of the invention will appear more clearly on reading the following detailed description which is made by way of non-exhaustive and non-limiting example, and with reference to the appended drawings, as follows:
- Figure 1 is a side view of an example of an intermediate stretched blow-molded container useful for understanding the invention.
- Figure 2 is schematic side side view of a blow mold cavity containing the intermediate stretched blow-molded container of figure 1.
- Figure 3 is a view in cross section of Figure 2 in plane III-III.
- Figure 4 is a side view of an example of the final stretched blow-molded container obtained from the intermediate stretched blow-molded container of figure 1.
- Figure 5 to 15 are views in cross section of the final stretched blow-molded container of figure 4 respectively in horizontal cross section planes V-V, VI-VI, VII-VII, VIII-VIII, IX-IX, X-X, XI-XI, XII-XII, XIII-XIII, XIV-XIV, XV-XV, said views showing in dotted lines the convex and outwardly protruding deformable region of the intermediate stretched blow-molded container of figure 1.
- Figure 16 is a view in cross section of the final stretched blow-molded container of figure 4 in cross section plane XVI-XVI.
- Figure 17 is an enhanced detail of figure 10.
- Figure 18 is another example of profile for the bottom portion of the recess of an intermediate stretched blow-molded container useful for understanding the invention.
- Figures 19 to 25 are other examples of horizontal cross section of a final stretched blow-molded container, wherein figures 12 to 22 and 25 show containers useful for understanding the invention and figures 23 and 24 show examples of container of the invention, the convex and outwardly protruding deformable region of the corresponding intermediate stretched blow-molded container being represented in dotted lines.

### Detailed description

Some preferred embodiments of the invention as well as some embodiment of containers which are not according to but helpful for understanding the invention are discussed in detail below. While specific exemplary embodiments are discussed, it should be understood that this is done for illustration purpose only. A person skilled in the art will recognize that other container designs or container dimensions can be used without parting from the spirit and scope of the invention.

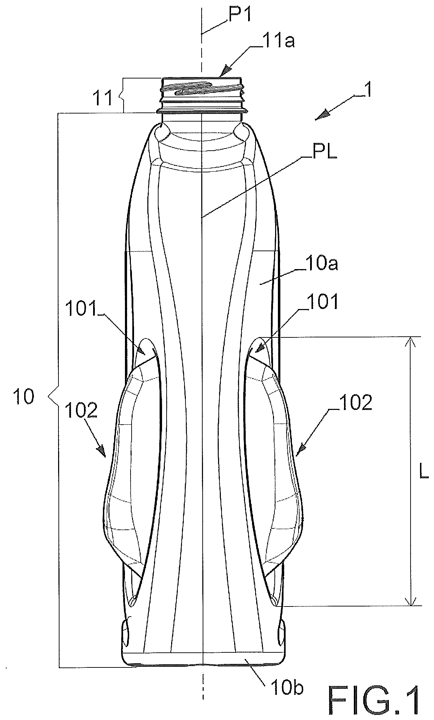

Referring now to the drawings, figure 1 illustrates an intermediate plastic container 1 having a biaxially stretched blow-molded hollow body 10, and a cylindrical neck finish 11 comprising a top pouring opening 11a. The biaxially stretched blow-molded hollow body 10 comprises a vertical side wall 10a extended by a bottom wall 10b forming the base of the container.

The intermediate plastic container 1 can be made of any thermoplastic material that can be processed by using injection stretched bow molded techniques. Preferred thermoplastic materials useful for the invention are polyesters, and in particular polyethylene terephtalate (PET), homo or copolymers thereof, and blend thereof. Other materials suitable for use in the present invention are polypropylene (PP), polyethylene (PE), polystyrene (PS), polyvinyl chloride (PVC) and polylactic acid (PLA), homo or copolymers thereof, and blend thereof.

Although the containers shown in the appended drawings are monolayer containers, the invention is however not limited to monolayer containers but encompasses also multilayer containers.

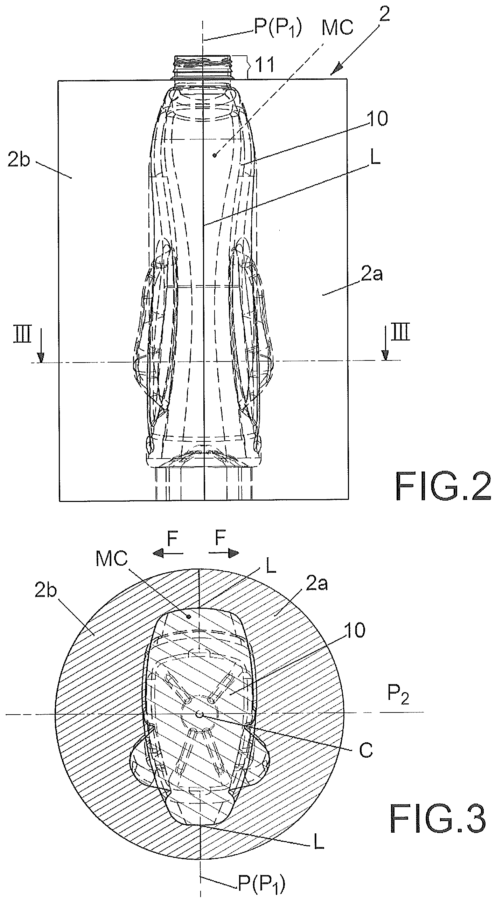

A well-known injection stretched blow molding technique can be used for making the intermediate plastic container 1. In particular, a small tubular plastic preform having the same neck finish 11 than the intermediate container 1 is knowingly injected in a mould. In reference to figures 2 and 3, this preform is subsequently biaxially stretched in a mold cavity MC of a blow mold 2 in order to form the intermediate container 1. During this blow molding step, the neck finish 11 is not stretched and only the body of the preform below the neck finish 11 is biaxially stretched in the mold cavity MC, in order to form the stretched blow-molded hollow body 10 of the container 1.

Within the scope of the invention a "one stage process" or a "two stages process" can be carried out. In the one stage process", the stretch-blow molding step of the preform is performed in line immediately after the first injection step (preform injection). In the "two stages process", the stretch-blow molding step of the preform in the blow mold cavity is postponed, and a reheating of the preform is performed prior to this stretch-blow molding step.

The blow mold 2 knowingly comprises two halves 2a, 2b that define a contact plane P when the mold is closed as depicted on figure 3. These two mold halves 2a ,2b can be moved away from each other in a direction perpendicular to plane P (arrows F of figure 3) in order to open the mold cavity MC and remove the container from the mold cavity MC.

The outer surface of the stretched blow-molded hollow body 10 of the intermediate container 1 comprises two visible and thin molding lines PL (figure 1), commonly referred as "parting lines". These parting lines PL are formed at each vertical intersection line L (figure 3) between the two mold halves 2a, 2b and the stretched blow molded hollow body 10. On figure 1, only one parting line PL is visible, the other opposite parting line PL being hidden and located on the opposite face of the container 1. These parting lines PL define for the intermediate container 1 a first main central vertical plane P1 that includes these parting lines PL. This first main central vertical plane P1 corresponds to aforesaid contact plane P when the container 1 is in the closed mold cavity (figure 3).

As depicted on the appended figures, the intermediate container 1 also comprises a second vertical central plane P2 perpendicular to the first vertical central plane P1. The vertical axis C at the intersection between the first P1 and second P2 central planes is the vertical central axis of the stretched blow-molded hollow body 10 of the intermediate container 1.

In the particular example of figure 1, this central axis C is also the central axis of the cylindrical neck finish 11. In other variants within the scope of the invention, the central axis of the cylindrical neck finish 11 is not necessarily the same than the vertical central axis C of the stretched blow-molded hollow body 10, but can be offset from said vertical central axis C. The central axis of the cylindrical neck finish 11 is also not necessarily parallel to the vertical central axis C of the stretched blow-molded hollow body 10, and the neck finish is not necessarily cylindrical.

In reference to figure 1, the stretched-blow molded hollow body 10 of container 1 comprises two opposite recesses 101 that are formed in the side wall 10a of the container 1. Each recess 101 defines a closed contour and is off-center from the second vertical central plane P2. The stretched-blow molded hollow body 10 of container 1 also comprises two opposite convex and outwardly protruding deformable regions 102 that are formed in the container side wall 10a. Each convex and outwardly protruding deformable region 102 is surrounded by one recess 101.

In reference to figure 1, each recess 101 forms an elongated closed contour of maximum vertical length L (maximum dimension of the recess 101 measured in a direction parallel to the central axis C of the container) and of maximum horizontal width W (dimension of the recess 101 measured in a direction perpendicular to the central axis C of the container). The recess 101 can form a closed contour of any shape, and can form a closed contour that is for example circular or rectangular. The recess 101 does not necessarily defined closed contour that would surround the convex and outwardly protruding deformable regions 102 on the whole periphery thereof, but the recess 101 in another variant, the recess 101 can also extend only on a portion of the periphery of the convex and outwardly protruding deformable regions 102.

In the particular embodiment of the appended figures, the two recesses 101 are identical and are symmetrical, and the two convex and outwardly protruding deformable regions 102 are also identical and are symmetrical, the central plane P1 forming a mirror symmetry plane for the recesses 101 and the convex and outwardly protruding deformable regions 102. Within the scope of the invention, in some embodiments of the invention, the two opposite recesses 101 are neither necessarily identical nor symmetrical, and the two opposite convex and outwardly protruding deformable regions 102 are neither necessarily identical nor symmetrical. The intermediate container 1 can also have only one recess 101 and one convex and outwardly protruding deformable regions 102 surrounded by said recess 101.

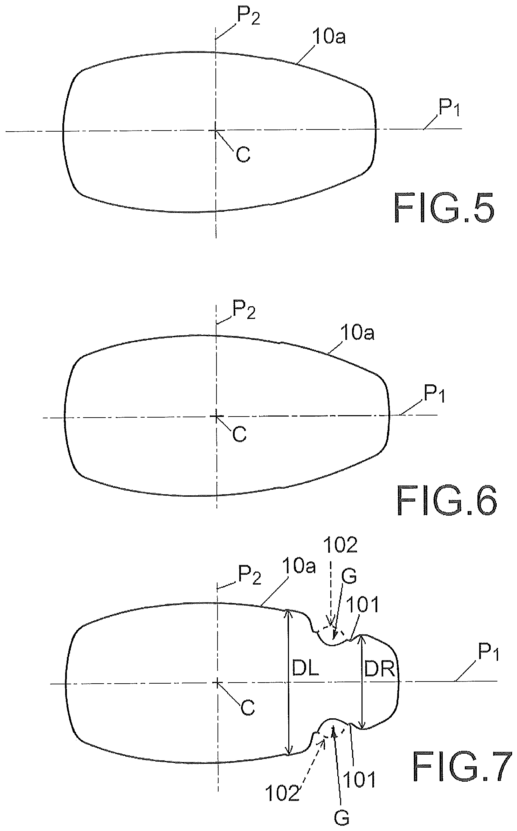

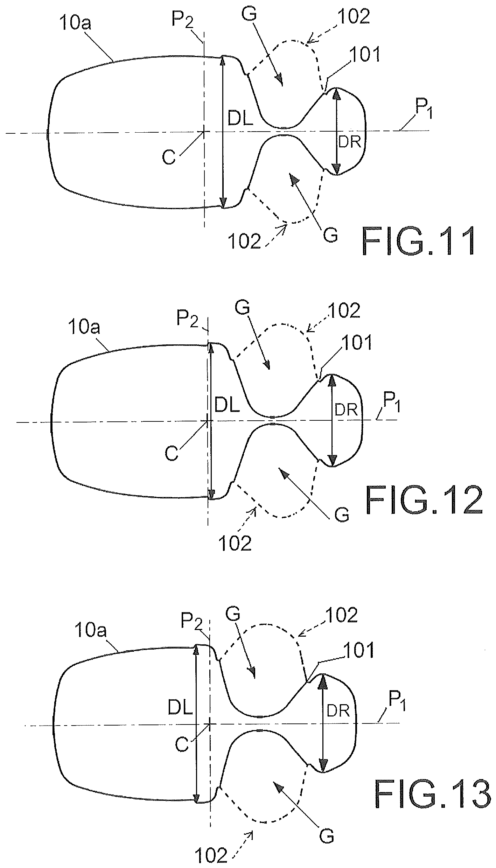

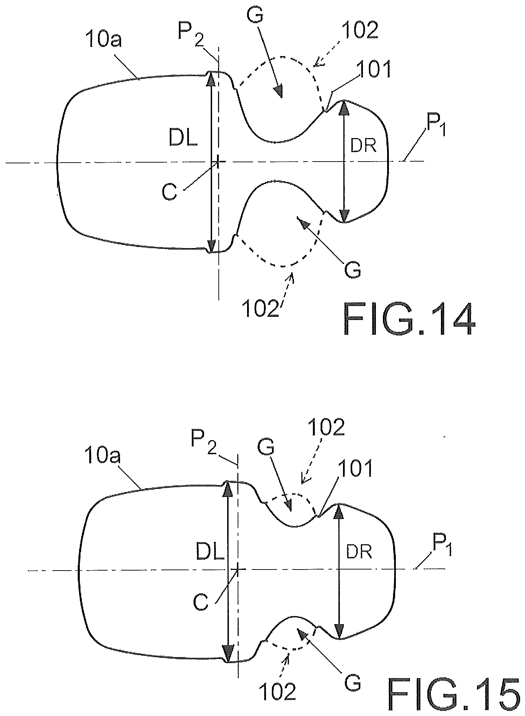

In reference to figure 7 to 15, dimension DR is the maximum dimension of the stretched-blow molded hollow body 10 measured in a gripping region of the container side wall 10a next to and on one side of each convex and outwardly protruding deformable region 102, in an horizontal cross section plane, that is perpendicular to the said first P1 and second P2 central vertical planes, and that is intersecting the recess 101, and in a direction perpendicular to the first vertical plane P1. Dimension DL is the maximum dimension of the stretched-blow molded hollow body 10a measured next to and on the other side of each convex and outwardly protruding deformable region 102in the same cross section plane and direction than dimension DR. In the invention dimension DR is smaller than dimension DL, in order to form in the container side wall 10a a gripping region that is more ergonomic. In particular, for an ergonomic gripping, dimension DR will be preferably between 30mm and 70mm, and preferably between 40mm and 60mm.

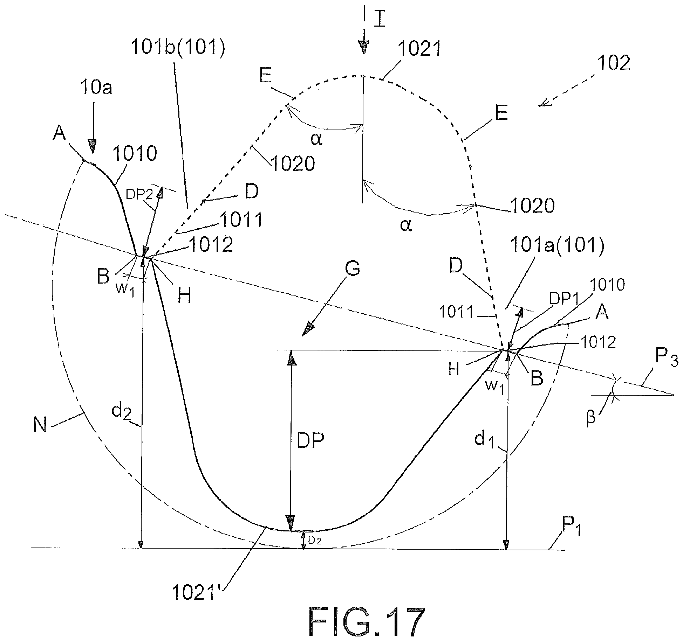

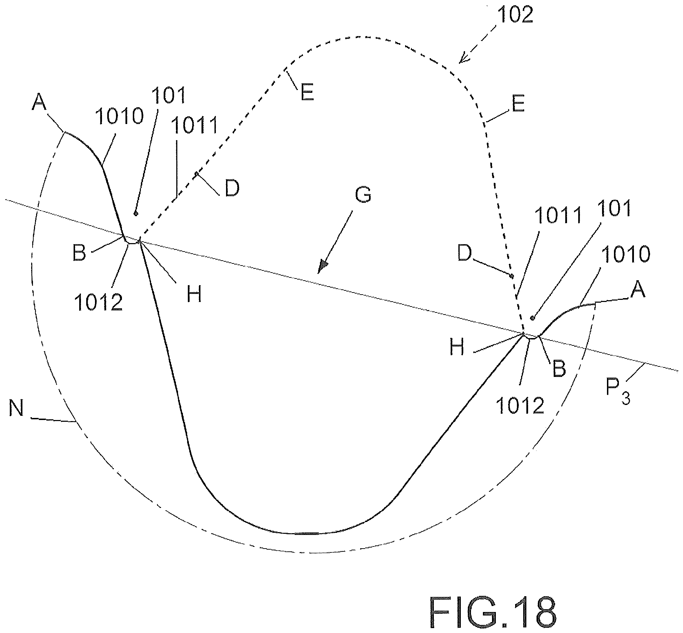

In reference to figure 17, each recess 101 comprises a first 1010 lateral wall extending between A and B, a second opposite lateral wall 1011 extending between H and D, and a bottom portion 1012 extending between B and H, and joining said first lateral wall 1010 to said second lateral wall 1011. In the particular embodiment of figure 17, the bottom portion 1012 is a flat wall of small width W1, for example between 1mm and 2mm. In another variant, the bottom portion 1012 can be also a small concave arc-shaped portion 1012 having a small radius of curvature as shown on the variant of figure 18.

More particularly, said first 101) and a second opposite 1011 lateral walls of said recess 101 are flat or smoothly curved without any hinge region.

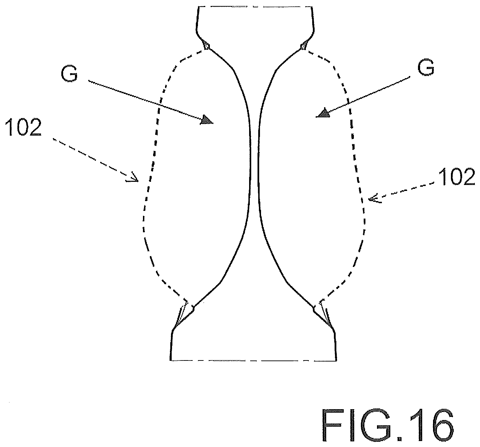

Referring to figures 7 to 18, each convex and outwardly protruding deformable region 102, before inversion thereof, is represented in dotted lines. Each convex and outwardly protruding deformable region 102 comprises an invertable lateral wall 1020 (figure 17/ between D and E) and a convex front wall 1021 (figure 17/ between E and E) that is an extension of this invertable lateral wall 1020. Said invertable lateral wall 1020 is an outward extension of said second lateral wall 1011 of the recess 101 and extends outwardly beyond the first lateral wall 1010 of the recess 101.

More particularly, the orthogonal projection on the first central plane P1 of each outwardly protruding deformable region 102 is located within the container.

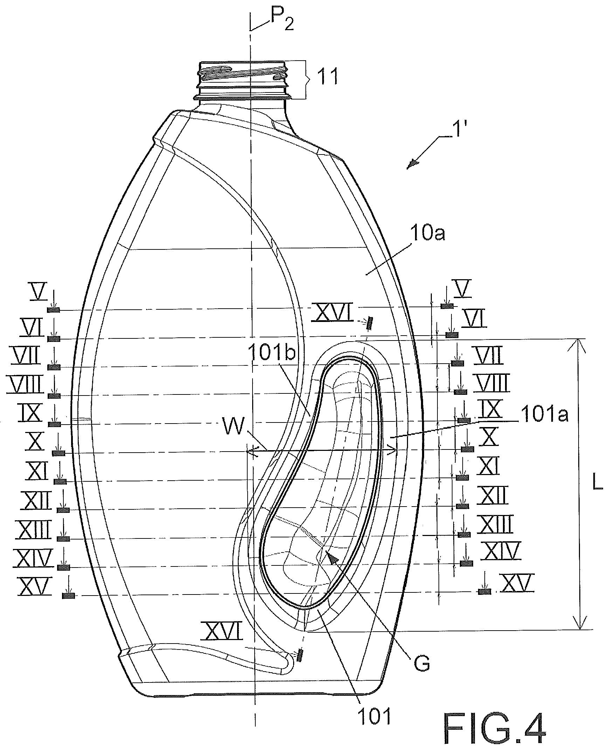

On the whole periphery of the convex and outwardly protruding deformable region 102, the junction H between the bottom portion 1012 and the second lateral wall 1011 of each recess 101 forms an hinge that can be used for mechanically inverting said convex and outwardly protruding deformable region 102 and the second lateral wall 1011 of the recess 101 by pushing them inwardly in order to form an ergonomic and integrally molded deep handgrip G. The final container 1' of figure 4 is thus obtained by pushing inwardly, towards the first vertical central plane P1, each convex and outwardly protruding deformable region 102 and each second lateral wall 1011 of the recess 101 in such a way to mechanically invert them and form the ergonomic and integrally molded deep handgrip G.

In reference to figure 17, once the convex and outwardly protruding deformable region 102 (in dotted lines) and the second lateral wall 1011 of the recess 101 have been mechanically inverted, it forms a concave grip region G, that is substantially the mirror image of the convex and outwardly protruding deformable region 102 and of the second lateral wall 1011 of the recess 101 with respect to a symmetry plane P3 that is tangential to aforesaid hinge H.

Said mechanical inversion is performed in a boxing step subsequently to the aforesaid first blow molding step. This boxing step can be carried out either in the blow mould cavity MC that has been used for making the intermediate stretched blow-molded container 1 or in a different and specific boxing mold. The boxing step is carried out by moving inwardly a moveable plug in the mould in contact with the front wall 1021 of the convex and outwardly protruding deformable region 102, while the inside of the intermediate stretched blow-molded container 1 is preferably filled with air under a certain pressure for maintaining an internal pressure inside the container, for example a pressure of about 20 bars. The mechanical force exerted by the moving plug onto the front wall 1021 of the convex deformable region 102 (see figure 17/ arrow I) is for example, but not necessarily, perpendicular to central plane P1. It can be exerted by a translational movement and/or a rotational movement of a plug actuated by a hydraulic, electric or pneumatic jack. During this boxing step, the deformable region 102 can be slightly stretched or on the contrary can be not stretched.

The boxing step is preferably carried out while the container is at a temperature below the glass transition temperature Tg of the polymer constituting the container (cold boxing). Within the scope of the invention, the boxing step can be however also carried out at a temperature above the glass transition temperature Tg (hot boxing step).

Once the deep concave hand grips G are formed in the final container 1', the air under pressure inside the final container 1 is exhausted in order to release the internal pressure inside the container 1', the mould cavity is opened, and the final container 1' is removed from the mould cavity.

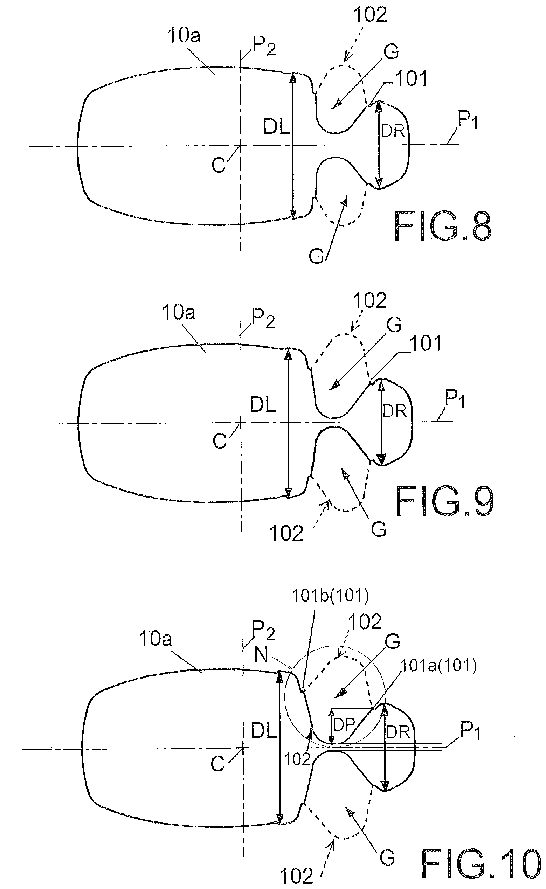

As shown on figures 10 and 17, each concave grip G resulting from the inversion of the convex an outwardly protruding deformable portion 102 and of the second lateral wall 1011of the recess 101 is deep and suitable for ergonomically receiving the fingers or thumb of a hand. Preferably, at least in a portion of the deep grip concave portion G (see figures 10 and 17) the minimum depth DP of the concave grip portion G (figure 17) measured in a direction perpendicular to the first central plane P1 is at least 15mm, and preferably at least 20mm and/or is more than 50%, and preferably more than 70% of half the aforesaid maximum dimension DR.

In a preferred embodiment, the minimum distance D2 (figure 17) between the bottom wall 1021' of each deep concave portion G and the central plane P1 is preferably not more than 5mm, and more preferably not more than 2mm. In another embodiment of the invention (not shown on the appended drawings) the two bottom walls 1021' of the two concave deep concave portions G can be in contact with each other, and if needed can be welded together or connected by another way

In order to improve the blowing of the intermediate container 1, the depth of the recess 101 is preferably not constant on the whole periphery of the recess. More particularly, as shown on figures 10 and 17, the recess 101 comprises a first portion 101a that is far away from the second vertical central plane P2 and a second portion 101b that is closest to the second vertical central plane P2, and the depth DP1 of said recess 101 measured in said first portion 101a of the recess is smaller than the depth DP2 of said recess 11 measured in said second portion 101b of the recess.

More preferably the depth DP1 of said recess 101 measured in said first portion 101a has to be very small and is preferably not more than 10mm, more preferably not more than 5mm and even more preferably between 0mm and 2mm. When the second portion 101b of the recess 101 that is closest to the second central plane P2 is offset from this central plane P2, the depth DP2 thereof is preferably not more than 10mm. In return, when the second portion 101b of the recess 101 that is closest to the second central plane P2 is actually included in this central plane P2, depth DP2 can be more than 10mm, and the only limitation for depth DP2 is the preform diameter.

Different trials have shown also that, for a better boxing of the intermediate container, the angle α (figure 17) between the invertable lateral wall 1020 of the convex and outwardly protruding region 102 and the second plane P2 is preferably not less than 10°. The distance d1 between the first central plane P1 and the bottom of the first portion 101a that is far away from second central plane P2 is also preferably smaller than or equal to the distance d2 between the first central plane P1 and the bottom of the second portion 101b of the recess 101 that is closest to the second central plane P2.

Moreover, for a good stretched blow molding of the intermediate container 1, the angle β between the symmetry plane P3 (figure 17) and the first central plane P1 is preferably not more than 15°. In addition, the gripping of the container is improved when the angle α is large and the angle β is small.

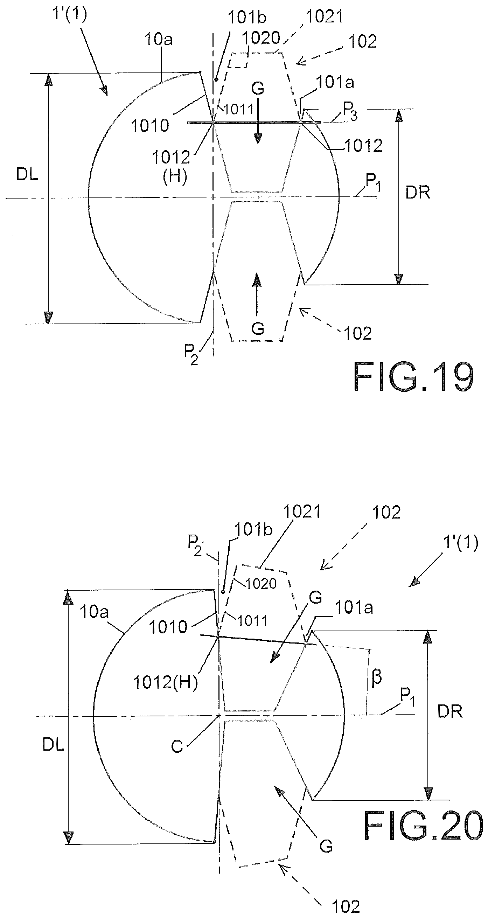

The invention is not limited to the particular design of intermediate container 1 and final container 1' of figures 1 to 18, and in fact does not encompass the exact example depicted in said figures. Figures 19 to 25 shows other examples of horizontal cross section of intermediate container 1 and final container 1' partially covered by the invention. On these figures 19 to 25, the convex outwardly protruding deformable region 102 of the intermediate container is represented in dotted lines. More particularly, the orthogonal projection on the first central plane P1 of each outwardly protruding deformable region 102 is located within the container.

On figure 19, the bottom portion 1012 of the second portion 101b of the recess 101 is intersected by the second central plane P2, and the symmetry plane P3 is parallel to first central plane P1 (β = 0).

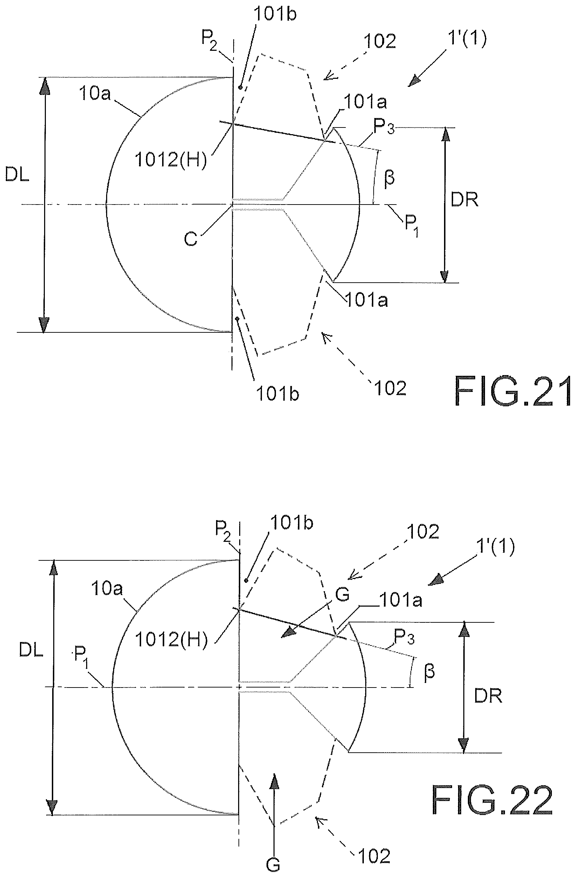

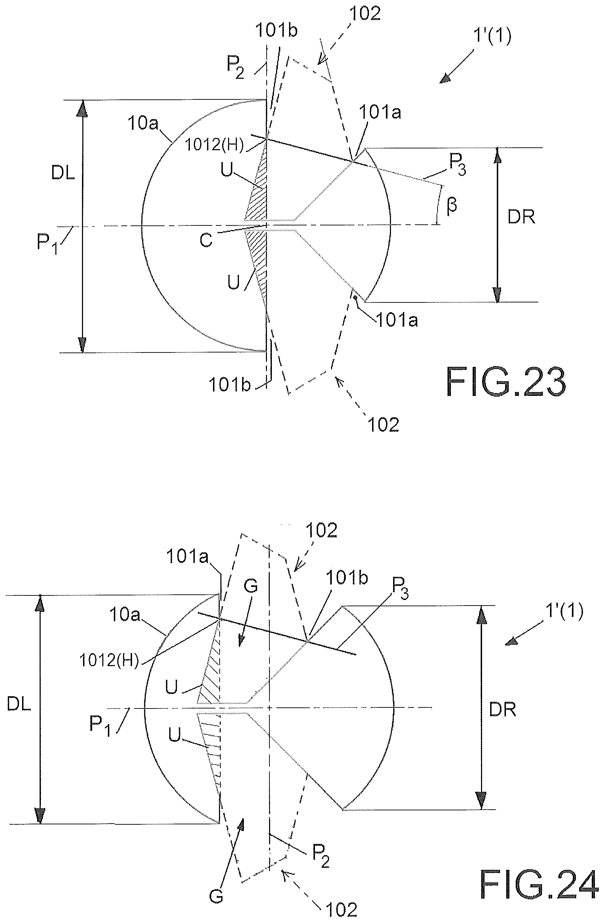

On figures 20 to 23, the bottom portion 1012 of the second portion 101b of the recess 101 is intersected by second plane P2, and the angle β between the symmetry plane P3 and first central plane P1 is about 5° for figure 20, about 10° for figure 21 and about 15° for figures 2 and 23.

On figure 24, the two bottom portions 1012 of the first 101a and second 101b portion of the recess 101 are offset from the second central plane P2 and are positioned respectively on each side of said second central plane.

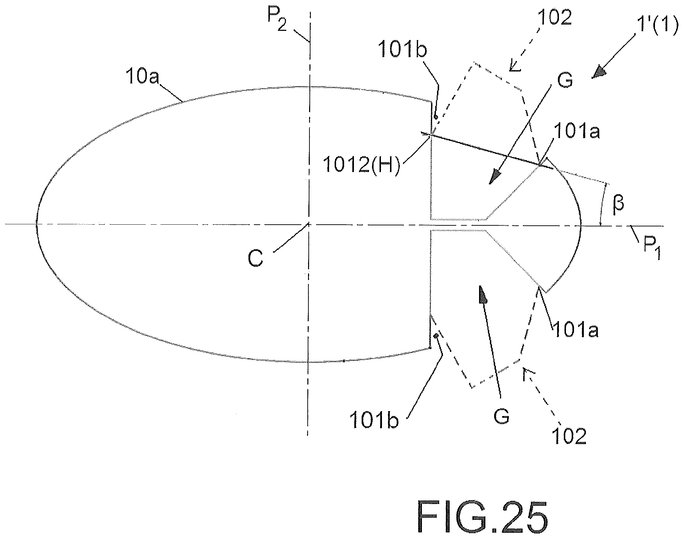

On figure 25 the two bottom portions 1012 of the first 101a and second 101b portion of the recess 101 are offset from the second central plane P2 and are positioned on the same side of said second central plane P2.

In the two embodiments of figures 23 and 24 , the deep concave grip G of the final container 1 advantageously comprises undercuts regions U (in hatched lines), that is to said regions U that cannot be reached from the outside of the container by a rectilinear axle that is moved in a direction perpendicular to first central plane P1. Usually, the blow molding of such container having undercuts would need the use of a complex blow molding mould having sliding parts for forming the undercut and enabling the removing of the container outside the mould.

More particularly, in the variants of figures 23 and 24, the undercut region U of the deep concave grip G is located on one side of the second vertical central plane P2 and at least a part of the deep concave grip G is located on the other side of the a second vertical central plane P2.

## Claims

1. A process for making a-stretched-blow molded container having at least one deep concave grip (G), said process comprising the steps of:
a) providing a preform in a mould cavity (MC) of a blow mold (2) comprising mold halves (2a, 2b),
b) stretch-blow moulding the preform to form an intermediate stretched blow-molded container (1) comprising a biaxially stretched-blow molded hollow body (10) having a first vertical central plane (P1), said first vertical central plane (P1) corresponding to a contact plane (P) of the mould haves (2a, 2b) when the container is in the blow mould (2) and a second vertical central plane (P2) perpendicular to the first vertical central plane (P1), said stretched-blow molded hollow body (10) comprising a container side wall (10a), at least one convex and outwardly protruding deformable region (102) that is formed in the container side wall (10a),
c) pushing inwardly said at least one convex and outwardly protruding deformable region (102) of the intermediate container (1) towards the first vertical central plane (P1), in such a way to invert said at least one convex and outwardly protruding deformable region (102) **characterized in that** the pushing inwardly is carried out in such a way to form in a final container (1') at least one deep concave grip (G) comprising an undercut region (U) that cannot be reached from the outside of the container by a rectilinear axle that is moved in a direction perpendicular to said first central plane (P1).

2. The process of claim 1, wherein the outwardly protruding deformable region (102) that is formed in the container side wall (10a) in step b) protrudes outwardly in such a way that the orthogonal projection of the outwardly protruding deformable region (102) on the first central plane (P1) is located within the container.

3. The process of any one of the previous claims, wherein the undercut region (U) of the deep concave grip (G) is located on one side of the second vertical central plane (P2) and at least a part of the deep concave grip (G) is located on the other side of the a second vertical central plane (P2).

4. The process of any one of the previous claims, wherein the at least one convex and outwardly protruding deformable region (102) is off-center from the second vertical central plane (P2).

5. The process of any one of the previous claims, wherein the maximum gripping dimension (DR) of the stretched-blow molded hollow body (10) measured next to and on one side of the convex and outwardly protruding deformable region (102) in a gripping region of the container, in a cross section plane that is perpendicular to the said first (P1) and second (P2) central vertical planes and that is intersecting the recess (101), and in a direction perpendicular to the first vertical plane (P1), is smaller than the maximum dimension (DL) of the stretched-blow molded hollow body (10) measured next to and on the other side of the convex and outwardly protruding deformable region (102) in the same cross section plane and direction.

6. The process of any one of the previous claims, wherein in the stretch-blow moulding step b), at least one recess (101) off-center from the second vertical central plane (P2) is formed in said container side wall (10a), wherein the said recess (101) comprises a first (1010) and a second opposite (1011) lateral walls and a bottom portion (1022) joining said first lateral wall (1010) to said second lateral wall (1011), wherein said convex and outwardly protruding deformable region (102) comprises an outwardly protruding invertable lateral wall (1020), that is an extension of said second lateral wall (1011) of the recess (101) at least on a portion of the periphery of the convex and outwardly protruding deformable region (102), and that extends beyond the first lateral wall (1010) of the recess (101), and a front wall (1021) that is an extension of this outwardly protruding invertable lateral wall (1020), wherein at least the junction (H) between the bottom portion (1012) and the second lateral wall (1011) of said recess (101) forms an hinge on the periphery of the outwardly protruding convex deformable region (102) for inverting the said outwardly protruding convex deformable region (102) and the second lateral wall (1011) of the recess (101) by pushing them inwardly in order to form said concave deep grip (G).

7. The process of claim 6, wherein the recess (101) defines a closed contour and the convex and outwardly protruding deformable region (102) is surrounded by said recess (101).

8. The process of any one of claims 6 or 7, wherein the depth of the recess (101) is not the same on the whole periphery of the recess.

9. The process of any one of claims 5 to 7, wherein said off-center recess (101) comprises a first portion (101a) that is far away from the second vertical central plane (P2) and a second portion (101b) that is closest to the second vertical central plane (P2) or is intersected by the second vertical central plane (P2), and wherein the depth (DP1) of said recess measured in said first portion (101a) of the recess is smaller than the depth (DP2) of said recess measured in said second portion (101b) of the recess.

10. The process of any one of claims 6 to 9, wherein said off-center recess (101) comprises a first portion (101a) that is far away from the second vertical central plane (P2) and a second portion (101b) that is intersected by the second vertical central plane (P2).

11. The process of any one of claims 6 to 10, wherein all the recess (101) is off-center from the second central plane (P2).

12. The process of any one of claims 6 to 11, wherein said off-center recess (101) comprises a first portion (101a) that is far away from the second vertical central plane (P2) and a second portion (101b) that is closest to the second vertical central plane (P2) or is intersected by the second vertical central plane (P2), and wherein the distance (d1) between the bottom of the first portion (101a) of the recess (101) and the first central plane (P1) is smaller than or equal to the distance (d2) between the bottom of said second portion (101b) of the recess (101) and the first central plane (P1).

13. The process of any one of claims 6 to 12, wherein in the stretch-blow moulding step b), two opposite convex and outwardly protruding deformable regions (102) are formed.

14. The process of claim 13, wherein each opposite convex and outwardly protruding deformable regions (102) is surrounded by a recess (101).

15. A stretched-blow molded container (1') obtained from the process of any of claims 1 to 14 and comprising at least one deep concave grip (G) in the container sidewall (10a), wherein the at least one deep concave grip (G) comprises an undercut region (U) that cannot be reached from the outside of the container by a rectilinear axle that is moved in a direction perpendicular to said first central plane (P1), wherein the container comprises parting lines (PL) included in said first central plane (P1).

## Patentansprüche

1. **Verfahren** zum Herstellen eines streckblasgeformten Behälters mit mindestens einem tiefen konkaven Griff (G), das Verfahren umfassend folgende Schritte:
a) Bereitstellen einer Vorform in einem Formhohlraum (MC) einer Blasform (2) umfassend Formhälften (2a, 2b),
b) Streckblasen der Vorform zum Formen eines streckblasgeformten Zwischenbehälters (1), umfassend einen biaxial streckblasgeformten Hohlkörper (10) mit einer ersten vertikalen Mittelebene (P1), wobei die erste vertikale Mittelebene (P1) zu einer Kontaktebene (P) der Formhälften (2a,2b) korrespondiert, wenn sich der Behälter in der Blasform (2) befindet, und
eine zur ersten vertikalen Mittelebene (P1) rechtwinklige zweite vertikale Mittelebene (P2), wobei der streckblasgeformte Hohlkörper (10) eine Behälterseitenwand (10a) aufweist, zumindest einen konvexen und nach außen hervorstehenden, verformbaren Bereich (102), der in der Behälterseitenwand (10a) geformt ist,
c) Einwärtsdrücken des mindestens einen konvexen und nach außen hervorstehenden, verformbaren Bereichs (102) des Zwischenbehälters (1) in Richtung der ersten vertikalen Mittelebene (P1), um den mindestens einen konvexen und nach außen vorstehenden, verformbare Bereich (102) zu invertieren, **dadurch gekennzeichnet, dass** das Einwärtsdrücken so ausgeführt wird, dass in einem Endbehälter (1') mindestens ein tiefer, konkaver Griff (G) mit einem Bereich (U) geformt wird, der von der Außenseite des Behälters aus durch eine in senkrechter Richtung zur ersten Mittelebene (P1) verlaufenden geradlinigen Achse nicht erreichbar ist.

2. Verfahren nach Anspruch 1, wobei der nach außen hervorstehende, verformbare Bereich (102), geformt in der Behälterseitenwand (10a) in Schritt b), so nach außen hervorsteht, dass die orthogonale Projektion des nach außen hervorstehenden, verformbaren Bereichs (102) an der ersten Mittelebene (P1) innerhalb des Behälters liegt.

3. Verfahren nach einem der vorherigen Ansprüche, wobei der Bereich (U) des tiefen, konkaven Griffs (G) an einer Seite der zweiten vertikalen Mittelebene (P2) liegt und zumindest ein Teil des tiefen, konkaven Griffs (G) auf der anderen Seite der zweiten vertikalen Mittelebene (P2) liegt.

4. Verfahren nach einem der vorherigen Ansprüche, wobei der mindestens eine konvexe und nach außen vorstehende, verformbare Bereich (102) außermittig von der zweiten vertikalen Mittelebene (P2) liegt.

5. Verfahren nach einem der vorherigen Ansprüche, wobei das maximale Griffmaß (DR) des streckblasgeformten Hohlkörpers (10), gemessen neben und an einer Seite des konvexen und nach außen hervorstehenden, verformbaren Bereichs (102) in einem Griffbereich des Behälters, in einer Querschnittsebene, die senkrecht zu der ersten (P1) und zweiten (P2) vertikalen Mittelebene steht und die die Einbuchtung (101) schneidet, und in senkrechter Richtung zur ersten vertikalen Mittelebene (P1) kleiner ist als das maximale Maß (DL) des streckblasgeformten Hohlkörpers (10), gemessen neben und an der anderen Seite des konvexen und nach außen hervorstehenden, verformbaren Bereichs (102) in der gleichen Querschnittsebene und Richtung.

6. Verfahren nach einem der vorherigen Ansprüche, wobei in Schritt b) des Streckblasformens mindestens eine Einbuchtung (101) außermittig von der zweiten vertikalen Mittelebene (P2) in der Behälterseitenwand (10a) geformt wird, wobei die Einbuchtung (101) eine erste (1010) und eine zweite (1011) gegenüberliegende Seitenwand umfasst sowie einen unteren Abschnitt (1022), der die erste Seitenwand (1010) mit der zweiten Seitenwand (1011) verbindet, wobei der konvexe und nach außen hervorstehende verformbare Bereich (102) eine nach außen hervorstehende, invertierbare Seitenwand (1020) aufweist, die eine Verlängerung ist der zweiten Seitenwand (1011) der Einbuchtung (101), zumindest an einem Abschnitt der Peripherie des konvexen und nach außen hervorstehenden, verformbaren Bereichs (102) und der sich über die erste Seitenwand (1010) der Einbuchtung (101) hinaus erstreckt, und eine Vorderwand (1021), die eine Verlängerung dieser nach außen hervorstehenden, invertierbaren Seitenwand (1020) ist, wobei zumindest die Verbindungsstelle (H) zwischen dem unteren Abschnitt (1012) und der zweiten Seitenwand (1011) der Einbuchtung (101) ein Gelenk an der Peripherie des nach außen hervorstehenden konvexen, verformbaren Bereichs (102) bildet zum Invertieren des nach außen hervorstehenden konvexen, verformbaren Bereichs (102), und der zweiten Seitenwand (1011) der Einbuchtung (101), um durch deren nach Eindrücken den konkaven, tiefen Griff (G) zu formen.

7. Verfahren nach Anspruch 6, wobei die Einbuchtung (101) eine geschlossene Kontur definiert und der konvexe und nach außen hervorstehende, verformbare Bereich (102) von dieser Einbuchtung (101) umgeben ist.

8. Verfahren nach einem der Ansprüche 6 oder 7, wobei die Tiefe der Einbuchtung (101) nicht an der gesamten Peripherie der Einbuchtung gleich ist.

9. Verfahren nach einem der Ansprüche 5 bis 7, wobei die außermittige Einbuchtung (101) einen ersten Abschnitt (101a) aufweist, der von der zweiten vertikalen Mittelebene (P2) weit entfernt ist und einen zweiten Abschnitt (101b), der der zweiten vertikalen Mittelebene (P2) am nächsten ist oder von der zweiten vertikalen Mittelebene (P2) geschnitten wird, und wobei die am ersten Abschnitt (101a) gemessene Tiefe (DP1) der Einbuchtung kleiner ist als die am zweiten Abschnitt (101b) gemessene Tiefe (DP2) der Einbuchtung.

10. Verfahren nach einem der Ansprüche 6 bis 9, wobei die außermittige Einbuchtung (101) einen ersten Abschnitt (101a) aufweist, der weit entfernt ist von der zweiten vertikalen Mittelebene (P2) und einen zweiten Abschnitt (101b), der von der zweiten vertikalen Mittelebene (P2) geschnitten wird.

11. Verfahren nach einem der Ansprüche 6 bis 10, wobei die gesamte Einbuchtung (101) außermittig von der zweiten Mittelebene (P2) liegt.

12. Verfahren nach einem der Ansprüche 6 bis 11, wobei die außermittige Einbuchtung (101) einen ersten Abschnitt (101a) aufweist, der weit entfernt ist von der zweiten vertikalen Mittelebene (P2) und einen zweiten Abschnitt (101b), der der zweiten vertikalen Mittelebene (P2) am nächsten ist oder von der zweiten vertikalen Mittelebene (P2) geschnitten wird, und wobei die Entfernung (d1) zwischen dem unteren Ende des ersten Abschnittes (101a) der Einbuchtung (101) und der ersten Mittelebene (P1) kleiner oder gleich ist der Entfernung (d2) zwischen dem unteren Ende des zweiten Abschnitts (101b) der Einbuchtung (101) und der ersten Mittelebene (P1).

13. Verfahren nach einem der Ansprüche 6 bis 12, wobei in Schritt b) des Streckblasformens zwei sich gegenüberliegende konvexe und nach außen hervorstehende, verformbare Abschnitte (102) geformt werden.

14. Verfahren nach Anspruch 13, wobei jeder der sich gegenüberliegenden konvexen und nach außen hervorstehenden, verformbaren Abschnitte (102) von einer Einbuchtung (101) umgeben ist.

15. **Streckblasgeformter Behälter (1')**, hergestellt durch ein Verfahren nach einem der Ansprüche 1 bis 14 und mit mindestens einem tiefen, konkaven Griff (G) in der Behälterseitenwand (10a), wobei der mindestens eine tiefe, konkave Griff (G) einen Bereich (U) aufweist, der von der Außenseite des Behälters nicht von einer in senkrechter Richtung zur ersten Mittelebene (P1) laufenden geradlinigen Achse erreicht werden kann, wobei der Behälter Trennlinien (PL) aufweist, die in der ersten Mittelebene (P1) liegen.

## Revendications

1. Procédé de fabrication d'un récipient moulé par étirage-soufflage présentant au moins une poignée concave profonde (G), ledit procédé comprenant les étapes suivantes:
a) disposer une préforme dans une cavité de moule (MC) d'un moule de soufflage (2) comprenant des moitiés de moule (2a, 2b),
b) mouler par étirage-soufflage la préforme afin de former un récipient moulé par étirage-soufflage intermédiaire (1) comprenant un corps creux moulé biaxialement par étirage-soufflage (10) présentant un premier plan central vertical (P1), ledit premier plan central vertical (P1) correspondant à un plan de contact (P) des moitiés de moule (2a, 2b) lorsque le récipient se trouve dans le moule de soufflage (2) et un second plan central vertical (P2) perpendiculaire au premier plan central vertical (P1), ledit corps creux moulé par étirage-soufflage (10) présentant une paroi latérale de récipient (10a), au moins une région déformable convexe et faisant saillie vers l'extérieur (102) qui est formée dans la paroi latérale de récipient (10a),
c) pousser vers l'intérieur ladite au moins une région déformable convexe et faisant saillie vers l'extérieur (102) du récipient intermédiaire (1) en direction du premier plan central vertical (P1), de manière à inverser ladite au moins une région déformable convexe et faisant saillie vers l'extérieur (102), **caractérisé en ce que** la poussée vers l'intérieur est réalisée de manière à former dans un récipient final (1') au moins une poignée concave profonde (G) comprenant une région (U) qui ne peut pas être atteinte depuis l'extérieur du récipient par un axe rectiligne qui est déplacé dans une direction perpendiculaire audit premier plan central (P1).

2. Procédé selon la revendication 1, dans lequel la région déformable faisant saillie vers l'extérieur (102) qui est formée dans la paroi latérale de récipient (10a) à l'étape b) fait saillie vers l'extérieur de telle manière que la projection orthogonale de la région déformable faisant saillie vers l'extérieur (102) sur le premier plan central (P1) soit située à l'intérieur du récipient.

3. Procédé selon l'une quelconque des revendications précédentes, dans lequel la région (U) de la poignée concave profonde (G) est située sur un côté du second plan central vertical (P2) et au moins une partie de la poignée concave profonde (G) est située sur l'autre côté du second plan central vertical (P2).

4. Procédé selon l'une quelconque des revendications précédentes, dans lequel ladite au moins une région déformable convexe et faisant saillie vers l'extérieur (102) est excentrée par rapport au second plan central vertical (P2).

5. Procédé selon l'une quelconque des revendications précédentes, dans lequel la dimension de préhension maximum (DR) du corps creux moulé par étirage-soufflage (10) mesurée à la suite de et sur un premier côté de la région déformable convexe et faisant saillie vers l'extérieur (102) dans une région de préhension du récipient, dans un plan en section transversale qui est perpendiculaire auxdits premier (P1) et second (P2) plans verticaux centraux et qui coupe l'évidement (101), et dans une direction perpendiculaire au premier plan vertical (P1), est inférieure à la dimension maximum (DL) du corps creux moulé par étirage-soufflage (10) mesurée à la suite de et sur l'autre côté de la région déformable convexe et faisant saillie vers l'extérieur (102) dans le même plan en section transversale et la même direction.

6. Procédé selon l'une quelconque des revendications précédentes, dans lequel à l'étape b) de moulage par étirage-soufflage, au moins un évidement (101) excentré par rapport au second plan central vertical (P2) est formé dans ladite paroi latérale de récipient (10a), dans lequel ledit évidement (101) comprend une première (1010) et une seconde (1011) parois latérales opposées et une partie inférieure (1022) qui joint ladite première paroi latérale (1010) et ladite seconde paroi latérale (1011), dans lequel ladite région déformable convexe et faisant saillie vers l'extérieur (102) comprend une paroi latérale inversable faisant saillie vers l'extérieur (1020), qui constitue un prolongement de ladite seconde paroi latérale (1011) de l'évidement (101) au moins sur une partie de la périphérie de la région déformable convexe et faisant saillie vers l'extérieur (102), et qui s'étend au-delà de la première paroi latérale (1010) de l'évidement (101), et une paroi avant (1021) qui constitue un prolongement de cette paroi latérale inversable faisant saillie vers l'extérieur (1020), dans lequel au moins la jonction (H) entre la partie inférieure (1012) et la seconde paroi latérale (1011) dudit évidement (101) forme une charnière sur la périphérie de la région déformable convexe et faisant saillie vers l'extérieur (102) afin d'inverser ladite région déformable convexe et faisant saillie vers l'extérieur (102) et la seconde paroi latérale (1011) de l'évidement (101) en les poussant vers l'intérieur dans le but de former ladite poignée profonde concave (G).

7. Procédé selon la revendication 6, dans lequel l'évidement (101) définit un contour fermé et la région déformable convexe et faisant saillie vers l'extérieur (102) est entourée par ledit évidement (101).

8. Procédé selon l'une quelconque des revendications 6 ou 7, dans lequel la profondeur de l'évidement (101) n'est pas la même sur la totalité de la périphérie de l'évidement.

9. Procédé selon l'une quelconque des revendications 5 à 7, dans lequel ledit évidement excentré (101) comprend une première partie (101a) qui est très éloignée du second plan central vertical (P2) et une seconde partie (101b) qui est la plus proche du second plan central vertical (P2) ou qui est coupée par le second plan central vertical (P2), et dans lequel la profondeur (DP1) dudit évidement mesurée dans ladite première partie (101a) de l'évidement est inférieure à la profondeur (DP2) dudit évidement mesurée dans ladite seconde partie (101b) de l'évidement.

10. Procédé selon l'une quelconque des revendications 6 à 9, dans lequel ledit évidement excentré (101) comprend une première partie (101a) qui est très éloignée du second plan central vertical (P2) et une seconde partie (101b) qui est coupée par la second plan central vertical (P2) .

11. Procédé selon l'une quelconque des revendications 6 à 10, dans lequel la totalité de l'évidement (101) est excentrée par rapport au second plan central (P2).

12. Procédé selon l'une quelconque des revendications 6 à 11, dans lequel ledit évidement excentré (101) comprend une première partie (101a) qui est très éloignée du second plan central vertical (P2) et une seconde partie (101b) qui est la plus proche du second plan central vertical (P2) ou qui est coupée par le second plan central vertical (P2), et dans lequel la distance (d1) entre le pied de la première partie (101a) de l'évidement (101) et le premier plan central (P1) est inférieure ou égale à la distance (d2) entre le pied de ladite seconde partie (101b) de l'évidement (101) et le premier plan central (P1).

13. Procédé selon l'une quelconque des revendications 6 à 12, dans lequel à l'étape b) de moulage par étirage-soufflage, deux régions déformables convexes faisant saillie vers l'extérieur opposées (102) sont formées.

14. Procédé selon la revendication 13, dans lequel chaque région déformable convexe et faisant saillie vers l'extérieur opposée (102) est entourée par un évidement (101).

15. Récipient moulé par étirage-soufflage (1') obtenu à partir du procédé selon l'une quelconque des revendications 1 à 14 et comprenant au moins une poignée concave profonde (G) dans la paroi latérale (10a) du récipient, dans lequel ladite au moins une poignée concave profonde (G) comprend une région (U) qui ne peut pas être atteinte depuis l'extérieur du récipient par un axe rectiligne qui est déplacé dans une direction perpendiculaire audit premier plan central (P1), dans lequel le récipient comprend des lignes de séparation (PL) incorporées dans ledit premier plan central (P1).
